(19) Europäisches Patentamt
European Patent Office
Office européen des brevets

(11) Veröffentlichungsnummer: **0 054 869**
**A1**

(12) # EUROPÄISCHE PATENTANMELDUNG

(21) Anmeldenummer: **81110382.9**

(22) Anmeldetag: **12.12.81**

(51) Int. Cl.³: **C 08 J 9/28**, B 01 F 17/00, C 08 J 3/02

(30) Priorität: **24.12.80 DE 3049195**

(43) Veröffentlichungstag der Anmeldung: **30.06.82 Patentblatt 82/26**

(84) Benannte Vertragsstaaten: **AT BE DE FR GB IT NL**

(71) Anmelder: **BAYER AG, Zentralbereich Patente, Marken und Lizenzen, D-5090 Leverkusen 1, Bayerwerk (DE)**

(72) Erfinder: **Preuss, Reinhard, Dr., Oderstrasse 55, D-4150 Krefeld 11 (DE)**
Erfinder: **Perrey, Hermann, Dr., Auf der Rheinaue 8, D-4150 Krefeld 11 (DE)**
Erfinder: **Klöker, Werner, Prof. Dr., Deswatinesstrasse 26, D-4150 Krefeld (DE)**

(54) **Verwendung von Polyalkylenglykolderivaten als Emulgatoren für Wasser-in-Öl-Dispersionen.**

(57) Umsetzungsprodukte von Polyalkylenglykolen mit Polycarbonsäuren bzw. Polyisocyanaten eignen sich hervorragend als Emulgatoren für Wasser-in-Öl-Dispersionen auf Basis ungesättigter Polyesterharze.

EP 0 054 869 A1

0054869

BAYER AKTIENGESELLSCHAFT 5090 Leverkusen, Bayerwerk

Zentralbereich
Patente, Marken und Lizenzen Pv/W

## Verwendung von Polyalkylenglykolderivaten als Emulgatoren für Wasser-in-Öl-Dispersionen

Die Erfindung betrifft die Verwendung von Umsetzungsprodukten von Polyalkylenglykolen mit zwei- oder mehrbasischen Carbonsäuren bzw. Di- oder Polyisocyanaten (oder deren reaktionsfähigen Derivaten) als Emulgatoren für Wasser-in-Öl (= W/O)-Dispersionen auf Basis ungesättigter Polyesterharze.

Emulgatoren für W/O-Dispersionen ungesättigter Polyesterharze sind bekannt: So hat man bereits vorgeschlagen, Polyaddukte aus Ethylen- und Propylenoxid (DE-OS 19 28 026, 22 56 496, 23 01 851), Ether von einwertigen Alkoholen mit 1 - 8 C-Atomen und Polyaddukten aus Ethylen- und Propylenoxid (DE-OS 20 46 575) und Polyester mit Molekulargewichten von 500 bis 10 000, die über ihre endständigen Hydroxyl- und/oder Carboxylgruppen Polyalkylenoxidreste gebunden enthalten (DE-AS 12 67 845), als Emulgatoren für W/O-Dispersionen zu verwenden.

Diese Emulgatoren waren mit einem wesentlichen Nachteil behaftet: Die Viskositäten der damit hergestellten Dispersionen zeigen eine starke Abhängigkeit von der

aufgewandten Dispergierenergie. Dies kommt in der Praxis dadurch zum Ausdruck, daß die Viskosität der Dispersion steil ansteigt, wenn das zur Dispergierung eingesetzte Rühraggregat nicht rechtzeitig abgestellt wird. In einzelnen Fällen kann die kritische Periode zwischen Erreichen einer optimalen Dispersion und unerwünschtem Viskositätsanstieg 1 Minute oder weniger betragen.

Es wurde nun gefunden, daß sich die geschilderten Schwierigkeiten überraschenderweise nicht einstellen, wenn man als Emulgatoren Umsetzungsprodukte von mono- oder difunktionellen Polyalkylenglykolen mit zwei- oder mehrbasischen Carbonsäuren bzw. Di- oder Polyisocyanaten (oder deren reaktionsfähigen Derivaten) verwendet und wenn diese Umsetzungsprodukte außerdem die unten definierten Parameter aufweisen.

Gegenstand der Erfindung ist also die Verwendung von Umsetzungsprodukten von Polyalkylenoxiden mit zwei- oder mehrbasischen Carbonsäuren (oder ihren reaktionsfähigen Derivaten) bzw. Di- oder Polyisocyanaten (oder ihren reaktionsfähigen Derivaten) als Emulgatoren für W/O-Dispersion auf Basis ungesättigter Polyesterharze, dadurch gekennzeichnet, daß die Emulgatoren

A) zu 75 - 97, vorzugsweise 85 - 96, insbesondere 90 - 95, Gew.-% aus Polyalkylenoxidresten und

B) zu 3 - 25, vorzugsweise 4 - 15, insbesondere 5 - 10, Gew.-% aus Resten von zwei- oder mehr basischen Carbonsäuren bzw. Di- oder Polyisocyanaten bestehen,

die Polyalkylenoxidreste als Zahlenmittel bestimmte mittlere Molekulargewichte von 800 - 5000, vorzugsweise 1500 - 4000, insbesondere 2000 - 3000, besitzen,

der Propylenoxidanteil dieser Polyalkylenoxidreste 10 - 70, vorzugsweise 15 - 60, Mol-% beträgt und

die zwei- oder mehrbasischen Carbonsäuren Molekulargewichte $<300$, vorzugsweise $<200$, und die Di- oder Polyisocyanate Molekulargewichte $<1500$, vorzugsweise $<500$, insbesondere $<300$, besitzen.

Die mit den erfindungsgemäß zu verwendenden Emulgatoren hergestellten W/O-Dispersionen besitzen neben der verminderten Abhängigkeit der Viskosität von der aufgewandten Dispergierenergie hohe Stabilität, relativ geringe Viskosität und zeigen eine nur geringe Abhängigkeit der Viskosität von der Emulgatorkonzentration.

Unter dem Begriff "ungesättigte Polyesterharze" werden Mischungen $\alpha$,ß-ethylenisch ungesättigter Polyester in damit copolymerisierbaren ungesättigten Monomeren verstanden.

$\alpha$,ß-Ethylenisch ungesättigte Polyester sind die üblichen Polykondensationsprodukte mindestens einer $\alpha$,ß-ethylenisch ungesättigten Dicarbonsäure mit in der Regel 4 oder 5 C-Atomen oder deren esterbildenden Derivaten, z.B. ihren Anhydriden, mit mindestens einer Polyhydroxiverbindung, insbesondere Dihydroxiverbindung mit 2 bis 15 C-Atomen - also Polyester, wie sie bei

H.V. Boenig, Unsaturated Polyesters: Structures and Properties, Elsevier Publishing Co., Amsterdam, S. 38 - 135, beschrieben sind.

Die Säurezahlen der Polyester liegen gewöhnlich zwischen 10 und 100, vorzugsweise zwischen 20 und 70, die OH-Zahlen zwischen 10 und 150, vorzugsweise zwischen 20 und 100, und die als Zahlenmittel bestimmten Molekulargewichte $\bar{M}_n$ zwischen ca. 500 und 5000, vorzugsweise zwischen ca. 1000 und 3000 (dampfdruckosometrisch gemessen in Dioxan und Aceton; bei differierenden Werten wird der niedrigere als der korrekte angesehen).

Für die Herstellung der α,ß-ethylenisch ungesättigten Polyester bevorzugt zu verwendende ungesättigte Dicarbonsäuren oder ihre Derivate sind Maleinsäure oder Maleinsäureanhydrid und Fumarsäure. Verwendet werden können z.B. jedoch auch Mesaconsäure, Citraconsäure, Itaconsäure oder Chlormaleinsäure. Beispiele für die zu verwendenden aromatischen, aliphatischen gesättigten und cyclo-aliphatischen Dicarbonsäuren oder ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäureanhydrid und Bernsteinsäureester und -chloride, Adipinsäure, Sebacinsäure. Um schwerentflammbare Harze herzustellen, können z.B. Hexachlorendomethylen-tetrahydrophthalsäure, Tetrachlorphthalsäure oder Tetrabromphthalsäure verwendet werden. Als zweiwertige Alkohole können

Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis-(4-hydroxicyclohexyl)-propan, bis-oxalkyliertes Bisphenol A, Perhydrobisphenol und andere eingesetzt werden. Bevorzugt verwendet werden Ethylenglykol, Propandiol-1,2, Diethylenglykol und Dipropylenglykol.

Weitere Modifikationen sind möglich durch Einbau ein-, drei- und vierwertiger Alkohole mit 1 - 6 C-Atomen, wie Methanol, Ethanol, Butanol, Allylalkohol, Benzylalkohol, Cyclohexanol und Tetrahydrofurfurylalkohol, Trimethylpropan, Glycerin und Pentaerythrit, von Mono-, Di- und Triallylethern und Benzylethern drei- und mehrwertiger Alkohole mit 3 - 6 C-Atomen gemäß DE-AS 1 024 654, z.B. Trimethylolpropandiallylether, sowie durch Einbau einbasischer Säuren wie Benzoesäure oder Acrylsäure.

Als mit den ungesättigten Polyestern copolymerisierbare ungesättigte Monomere eignen sich in der Polyestertechnologie gebräuchliche ungesättigte Verbindungen, die bevorzugt $\alpha$-substituierte Vinyl- oder Vinylidengruppen oder ß-substituierte Allylgruppen tragen, bevorzugt Styrol; aber auch beispielsweise kernchlorierte und -alkylierte bzw. -alkenylierte Styrole, wobei die Alkylgruppen 1 - 4 Kohlenstoffatome enthalten können, z.B. Vinyltoluol, Divinylbenzol, $\alpha$-Methylstyrol, tert.-Butylstyrol, Chlorstyrole; Vinylester von Carbonsäuren mit 2 - 6 Kohlenstoffatomen, bevorzugt Vinylacetat, Vinylpropionat, Vinylbenzoat; Vinylpyridin, Vinylnaphthalin, Vinylcyclohexan, Acrylsäure und Methacrylsäure und/oder ihre Ester (vorzugsweise Vinyl-, Allyl- und Methallylester) mit 1 - 4 Kohlenstoffatomen in der Alkoholkomponente, ihre Amide und Nitrile, Maleinsäureanhydrid, -halb- und -diester mit 1 - 4 Kohlenstoffatomen in der Alkoholkomponente, -halb- und -diamide oder cyclische Imide wie Butylacrylat, Methylmethacrylat, Acrylnitril, N-Methylmaleinimid oder N-Cyclohexylmaleinimid; Allylverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat und Triallylcyanurat.

Ungesättigte Polyesterharze bestehen in der Regel zu 30 - 70 Gew.-% aus $\alpha$,ß-ethylenisch ungesättigten Polyestern und zu 70 - 30 Gew.-% aus damit copolymerisierbaren Monomeren.

Die Polyalkylenoxidreste A umfassen Reste von Ethylenoxid-/Propylenoxid-Addukten und Reste von Mischungen solcher Addukte mit Ethylenoxid-Homopolyaddukten.

Die Reste von zwei- oder mehrbasischen Carbonsäuren B sind Reste von Carbonsäuren mit 3 bis 18 C-Atomen und umfassen die Reste der oben als Ausgangskomponenten für die Herstellung ungesättigter Polyester aufgezählten zwei- und mehrbasischen Carbonsäuren sowie Reste von Malonsäure, Glutarsäure, Pimelinsäure, Korksäure, Azelainsäure, Brassylsäure, Glutaconsäure, Hemimellithsäure, Trimellitsäure, Trimesinsäure, Neophansäure, Prehnitsäure, Pyromellitsäure, Aconitsäure, Tricarballylsäure und oligomere Umsetzungsprodukte von Styrol oder Vinylethern mit Maleinsäureanhydrid. Reaktionsfähige Derivate, die anstelle der freien Carbonsäuren eingesetzt werden können, sind z.B. Anhydride, Ester und Säurechloride.

Bevorzugte Dicarbonsäuren bzw. Dicarbonsäurederivate B sind Glutarsäure, Adipinsäure, Brassylsäure, Phthalsäure, Phthalsäureanhydrid, Tetrahydrophthalsäureanhydrid, Maleinsäure, Maleinsäureanhydrid und Fumarsäure.

Die Reste von Di- und Polyisocyanaten B umfassen Reste von Isocyanaten mit 2 bis 6 Isocyanatgruppen pro Molekül, insbesondere die Reste von Ethylen-diisocyanat, 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat, 1-Isocyanato-3,3,5-trimethyl-5-isocyanatomethyl-cyclohexan, ("Isophorondiisocyanat"), Phorondiisocyanat (2,2,4- bzw. 2,4,4-Trimethyl-hexamethylendiisocyanat-1,6), 2,4- und 2,6-Hexahydrotoluylendiisocyanat, Hexahydro-1,3- und/oder -1,4-phenylen-diisocyanat, Perhydro-2,4'- und/oder -4,4'-diphenylmethan-diisocyanat, 1,5-Naphthalindiisocyanat, 1,3-Cyclopentylendiisocyanat, 1,3- und 1,4-Phenylendiisocyanat, 2,4- und 2,6-Toluylendiisocyanat, Diphenylmethan-2,4'- und/oder -4,4'-diisocyanat, 1,3- und 1,4-Xylylendiisocyanat, 3,3'-Dimethyl-4,4'-diphenylmethandiisocyanat, 4,4'-Biphenylendiisocyanat, 1-Phenoxi-2,4'-phenylen-diisocyanat, 1-tert.-Butyl-2,4-phenylendiisocyanat, Methylen-bis-4,4'-cyclohexyldiisocyanat, 1-Chlor-2,4-phenylendiisocyanat, 4,4'-Diphenyletherdiisocyanat, 2,4,6-Toluylentriisocyanat, Triphenylmethan-4,4',4"-triisocyanat, Polyphenyl-polymethylen-polyisocyanate, wie sie durch Anilin-Formaldehyd-Kondensation und anschließende Phosgenierung erhalten werden, perchlorierte Arylpolyisocyanate, Carbodiimidgruppen aufweisende Polyisocyanate, Allophanatgruppen aufweisende Polyisocyanate, Isocyanuratgruppen aufweisende Polyisocyanate, Urethangruppen aufweisende Polyisocyanate, acylierte Harnstoffgruppen aufweisende Polyisocyanate, Biuretgruppen aufweisende Polyisocyanate, durch Telomerisationsreaktionen hergestellte Polyisocyanate, Estergruppen aufweisende Polyisocyanate, Umsetzungsprodukte der oben genannten Isocyanate mit Acetalen und polymere Fettsäurereste enthaltende Polyisocyanate; Polyisocyanate, die aus Di- oder Polyisocyanaten durch partielle Hydrolyse über die Stufe der Carbamidsäure und des Amins zu höheren harnstoff- oder biuretverknüpften Systemen aufgebaut werden, wie z.B. eine biuretverknüpfte Verbindung, die formal aus 3 Mol Hexamethylendiisocyanat unter Zusatz von 1 Mol Wasser und Abspaltung von 1 Mol Kohlendioxid entstanden ist; Polyisocyanate, die bei der Umsetzung von Di- oder Polyolen mit di- oder polyfunktionellen Isocyanaten erhalten werden, wenn das Molverhältnis von Hydroxiverbindung zu Isocyanat so gewählt wird, daß bei den statisch gebildeten Reaktionsprodukten stets freie NCO-Funktionen vorhanden bleiben und ein Molekulargewicht von 1500 nicht überschritten wird.

Alle oben aufgeführten Di- und Polyisocyanate können in dieser Weise mit Di- und Polyolen, wie z.B. Mono- und Polyethylenglykol, Propandiolen, Butandiolen, Neopentylglykol und anderen Pentandiolen, Hexandiolen, Cyclohexandiolen, Trimethylolethan, Trimethylolpropan, anderen Hexantriolen und Pentaerythrit umgesetzt werden.

Bevorzugte Diisocyanate sind Hexamethylendiisocyanat, Isophorondiisocyanat, Toluylendiisocyanat und 4,4'-Diphenylmethandiisocyanat.

Reaktionsfähige Derivate, die anstelle der freien Isocyanate eingesetzt werden können, sind verkappte Isocyanate, wie sie z.B. in "Methoden der Organischen Chemie" (Houben - Weyl), Bd. 14/2, 4.Aufl., Georg Thieme Verlag, Stuttgart 1963,S. 61-70, beschrieben sind.

Die zwei- und/oder mehrbasischen Carbonsäuren (oder ihre reaktionsfähigen Derivate) bzw. die Di- und/oder Polyisocyanate (oder ihre reaktionsfähigen Derivate) können, ggf. in Gegenwart eines Lösungsmittels und/oder Katalysators, mit den Polyalkylenoxiden zu Polyetherestern oder Polyetherurethanen umgesetzt werden.

Ob man bei der Härtung der W/O-Dispersionen überwiegend geschlossenporige oder überwiegend offenporige Formkörper erhält, läßt sich durch die Wahl des Emulgators weitgehend beeinflussen: Umsetzungsprodukte aus difunktionellen Polyalkylenoxiden und difunktionellen Isocyanaten, vorzugsweise aber difunktionellen Dicarbonsäuren führen zu überwiegend offenporigen Formkörpern, während Umsetzungsprodukte aus monofunktionellen Polyalkylenoxiden und Isocyanaten mit mehr als zwei Isocyanatgruppen pro Molekül zu überwiegend geschlossenporigen Formkörpern führen. Es ist zu beachten, daß überwiegend geschlossenporige Formkörper erst bei Harz/Wasser-Verhältnissen von mindestens 1:1 entstehen.

Bevorzugte Emulgatoren für die Herstellung offenporiger Formkörper sind Verbindungen mit einem als Zahlenmittel $M_n$ bestimmten Molekulargewicht $\bar{M}_n$ (dampfdruckosmometrisch in Ethanol bestimmt) von 2500 bis 5000 enthaltend im Mittel 3 bis 10 wiederkehrende Einheiten der Formel

$$-X-(O-CHR^1-CH_2)_nO- \qquad (I)$$

worin

X CO-$R^2$-CO oder CO-NH-$R^3$-NH-CO,
$R^1$ H oder $CH_3$,
$R^2$,$R^3$ je einen zweiwertigen aliphatischen, cycloaliphatischen, araliphatischen oder aromatischen Rest mit 2 - 18 C-Atomen und
n im Mittel eine Zahl von 18 bis 110 bedeuten mit der Maßgabe, daß diese Verbindungen keine Reste mehr als difunktioneller Verbindungen enthalten.

Dies bedeutet, daß für die Herstellung dieser bevorzugten Emulgatoren keine Verzweigungsmittel eingesetzt werden.

Die Endgruppen ergeben sich aus Art und Molverhältnis der Ausgangskomponenten: So kommen bei Verwendung von Dicarbonsäure(derivate)n als X-ständige Endgruppen OH und O-Alkyl, als O-ständige Endgruppen Wasserstoff, $CO-R^2-COOH$ und $CO-R^2-COOAlkyl$ in Frage; ebenso können zwei Einheiten der Formel I über einen zweiwertigen Rest der Formel $CO-R^2-CO$ verknüpft sein.

Bei Verwendung von Isocyanaten können als X-ständige Endgruppe $NH_2$, als O-ständige Endgruppe Wasserstoff $CO-NH-R^3-NH_2$ auftreten; ebenso können zwei Einheiten der Formel I über einen zweiwertigen Rest der Formel $CO-NH-R^3-NH-CO$ verknüpft sein. Bei einem Überschuß an Isocyanat reagieren die $NH_2$-Gruppen bekanntlich zu Harnstoffgruppen weiter, so daß auch diese als verknüpfende Reste auftreten können. Werden verkappte Isocyanate benutzt, so können selbstverständlich auch verkappte Isocyanatgruppen als Endgruppe der Emulgatoren auftreten.

Emulgatoren mit eingebauten Dicarbonsäureestern zeichnen sich durch gute Verträglichkeit mit anorganischen Pigmenten aus.

Bevorzugte Emulgatoren für die Herstellung offenporiger Formkörper besitzen Säurezahlen von 8 - 14, OH-Zahlen von 8 - 14 und Verseifungszahlen von 45 - 75, vorzugsweise von 50 - 65.

Besonders bevorzugte Emulgatoren für die Herstellung offenporiger Formkörper sind Polyetherester der oben geschilderten Art, die unter Verwendung ungesättigter

Dicarbonsäuren (oder ihrer Derivate), z.B. Maleinsäureanhydrid, hergestellt worden sind. Sie zeigen keine Tendenz zur Migration aus den gehärteten Formkörpern.

Bevorzugte Emulgatoren für die Herstellung geschlossenporiger Formkörper sind Verbindungen mit einem als Zahlenmittel bestimmten Molekulargewicht $\bar{M}_n$ (dampfdruckosmometrisch in Ethanol gemessen) von 4000 bis 9000, vorzugsweise von 6000 bis 8000, der Formel

$$R^4[-NH-CO-(O-CHR^5-CH_2-)_xO-R^6]_y$$

worin

$R^4$ einen y-wertigen aliphatischen, cycloaliphatischen, araliphatischen oder aromatischen Rest mit 2 - 36 C-Atomen,

$R^5$ H oder $CH_3$,

$R^6$ einen einwertigen aliphatischen Rest mit 1 - 18, vorzugsweise 3 - 5, C-Atomen,

x im Mittel eine Zahl von 18 bis 100 und

y im Mittel eine Zahl von 3 - 15, vorzugsweise von 3 - 6, bedeuten.

Der Urethangruppengehalt bevorzugter Emulgatoren für die Herstellung geschlossenporiger Formkörper beträgt 1,5 - 6 Gew.-%. Er kann durch Infrarot-Spektroskopie ermittelt werden.

Setzt man Polyisocyanate, die mehr als zwei Isocyanatgruppen enthalten, im Überschuß ein und enthält das Polyalkylenoxid Wasser oder wird nach der Umsetzung des Polyalkylenoxids mit dem überschüssigen Polyisocyanat Wasser zugegeben, erhält man einen Molekulargewichtsaufbau, der über eine Hydrolyse der Isocyanatgrupppen mit Wasser zu Aminen und einer rascher als die Hydrolyse verlaufenden Umsetzung dieser Aminogruppen mit noch vorhandenen Isocyanatgruppen verläuft. Ein derartiges Herstellungsverfahren wird gegenüber dem primären Aufbau eines Polyisocyanates mit nachfolgender Umsetzung mit einem Polyalkylenoxid bevorzugt.

Die mit dem erfindungsgemäß zu verwendenden Emulgatoren hergestellten W/O-Dispersionen enthalten in der Regel 15 - 80, vorzugsweise 35 - 75 Gew.-% Wasser. Die offenporigen Formkörper geben während des Lagerns das Wasser weitaus schneller ab als die geschlossenporigen Formkörper.

Die erfindungsgemäß zu verwendenden Emulgatoren werden in der Regel in Mengen von 0,1 bis 10, vorzugsweise von 0,5 bis 3 Gew.-%, bezogen auf die Summe von ungesättigtem Polyesterharz und Wasser, eingesetzt.

Die Dispersionen können auf übliche Weise hergestellt werden. So kann z.B. Wasser einer Mischung aus ungesättigtem Polyesterharz und Emulgator unter Rühren zugesetzt werden; umgekehrt kann natürlich auch die Mischung aus ungesättigtem Polyesterharz und Emulgator in Wasser eingerührt werden.

Den Dispersionen können vor, während oder nach der Herstellung Füll- und Verstärkungsmittel sowie andere Hilfsmittel zugemischt werden, wie z.B. Calciumcarbonat, Calciummagnesiumcarbonat, Bariumsulfat, Titandioxid, organische und anorganische Farbstoffe, Sand, Quarzmehl, nachbehandelte Siliciumdioxide sowie Aluminiumoxide und -hydroxide, Silikate, vernetzte Phenol/Formaldehyd- und Harnstoff/Formaldehyd-Kondensate, Mono-, Di- und Polysaccharide sowie deren Hydrierungsprodukte.

Die Dispersionen können nach Zugabe von Polymerisationsinitiatoren, wie Peroxiden, Persulfaten oder Azoverbindungen, gegebebenenfalls in Gegenwart von Beschleunigern, wie den bekannten Metall- oder Aminbeschleunigern, gehärtet werden. Die Härtung kann auch mittels ionisierender Strahlung erfolgen.

## Beispiele

A. Herstellung der erfindungsgemäß zu verwendenden Emulgatoren

### Emulgator 1

1887 g eines wasserfreien monofunktionellen Polyalkylenoxids mit einer OH-Zahl von 21,4, das durch auf n-Butanol gestartete Addition gleicher molarer Mengen von Ethylen- und Propylenoxid erhalten worden ist, werden unter Rühren bei Raumtemperatur mit 1,9 g Diazabicyclooctan und 143,3 g ® Desmodur N (biuretverknüpfte Verbindung, formal entstanden aus 3 Mol Hexamethylendiisocyanat und 1 Mol Wasser unter Abspaltung von 1 Mol $CO_2$) versetzt. Nach 2-stündigem Erhitzen auf 110°C werden bei 90°C 10 g Wasser zugegeben. Der erhaltene Emulgator 1 ist nach Abkühlung verwendungsfähig.

### Emulgator 2

1887 g des für die Herstellung des Emulgators 1 verwandten Polyalkylenoxids werden mit 2 l Toluol versetzt und auf 70°C erhitzt. Unter Rühren werden 1,9 g Diazabicyclooctan und eine Lösung von 143,3 g R Desomodur N in 600 ml Toluol zugegeben. Die Reaktionsmischung wird 2 Stunden unter Rückfluß erhitzt; dann werden bei 90°C 10 g Wasser zugegeben. Nach weiteren 15 Minuten wird das Toluol abdestilliert. Der Emulgator 2 verbleibt als Rückstand.

Emulgator 3

240 g eines difunktionellen Polyalkylenoxids mit einer OH-Zahl von 28, das durch Polyaddition von 20 Mol-% Ethylenoxid und 80 Mol-% Propylenoxid erhalten worden ist, 744 g eines Polyethylenoxids mit einer OH-Zahl von 75 und 78,6 g Adipinsäure werden unter Stickstoffatmosphäre bei 190 - 200°C bis zum Erreichen einer Säurezahl von 12 verestert. Der erhaltene Emulgator 2 kann direkt eingesetzt werden.

Emulgator 4

240 g des für die Herstellung des Emulgators I verwandten Polyalkylenoxids mit einer OH-Zahl von 28, 558 g eines Polyethylenoxids mit einer OH-Zahl von 75 und 61,2 g Adipinsäure werden unter Stickstoffatmosphäre bei 190 - 200°C bis zum Erreichen einer Säurezahl von 12 versetzt. Der erhaltene Emulgator 4 kann direkt eingesetzt werden.

Emulgator 5

160 g des für die Herstellung des Emulgators 3 verwandten Polyalkylenoxids mit einer OH-Zahl von 28 und 372 g eines wasserfreien Polyethylenoxids mit einer OH-Zahl von 75 werden in 1 l Toluol auf 90°C erhitzt und unter Rühren mit 0,4 g Natriummethylat und einer Lösung von 44 g Hexamethylendiisocyanat in 50 ml Toluol versetzt. Nach 3-stündigem Erhitzen auf 100°C

wird das Toluol abdestilliert. Der Emulgator 5 verbleibt als Rückstand.

B. Ungesättigte Polyesterharze

Ein aus Maleinsäureanhydrid, Phthalsäureanhydrid, Ethylenglykol und 1,3-Butylenglykol hergestellter Polyester mit einer Säurezahl $<$20 wurde 65 gew.-%-ig in Styrol gelöst. Das erhaltene Harz I besaß eine bei 20°C gemessene Viskosität von 600 mPas.s. Harz I wurde bis zu einem Styrolgehalt von 55 Gew.-% (Harz II) mit Styrol verdünnt.

C. Emulgatoren des Standes der Technik

<u>Emulgator I</u> (Vergleich)

Ein festes Ethylenoxid/Propylenoyid-Polyaddukt mit einem mittleren Molekulargewicht von 8350, einem Schmelzpunkt von 52°C, einem Gehalt an Polyethylenoxidresten von 80 Gew.-% und einem mittleren Molekulargewicht der Polypropylenoxidreste von 1750.

<u>Emulgator II</u> (Vergleich)

Ein festes Ethylenoxid/Propylenoxid-Polyaddukt mit einem mittleren Molekulargewicht von 14.000, einem Schmelzpunkt von 57°C, einem Gehalt an Polyethylenoxidresten von 80 Gew.-% und einem mittleren Molekulargewicht der Polypropylenoxidreste von 3250.

Emulgator III (Vergleich)

Ein pastenförmiges Ethylenoxid/Propylenoxid-Polyaddukt mit einem mittleren Molekulargewicht von 5850, einem Schmelzpunkt von 37,5°C, einem Gehalt von Polyethylenoxidresten von 40 Gew.-% und einem mittleren Molekulargewicht der Polypropylenoxidreste von 3250.

Emulgator IV (Vergleich)

Ein pastenförmiges Ethylenoxid/Propylenoxid-Polyaddukt mit einem mittleren Molekulargewicht von 5750, einem Schmelzpunkt von 31°C, einem Gehalt an Polyethylenoxidresten von 30 Gew.-% und einem mittleren Molekulargewicht der Polypropylenoxidreste von 4000.

Emulgator V (Vergleich)

Ein pastenförmiges Ethylenoxid/Propylenoxid-Polyaddukt mit einem mittleren Molekulargewicht von ca. 6000, einem Erweichungspunkt unter 30°C und einem Gehalt an Polyethylenoxidresten von 36 Gew.-%.

Die Vergleichsemulgatoren I-V enthalten weder Urethannoch Estergruppen.

Beispiele 1 - 5

Vergleichsbeispiele 1 - 5

500 g ungesättigtes Polyesterharz II, 9 g Emulgator und 500 g Wasser wurden in einem 2 l-Becher mittels eines Flügelrührers (2000 Upm) dispergiert, bis sich die Viskosität nicht mehr änderte. Lagerstabilität und Viskosität sind der folgenden Tabelle zu entnehmen.

| Beispiel | verw. Emulgator | Beginn der Trennung nach | vollständige Trennung nach | Auslaufzeit nach DIN 53 211 bei 25°C |
|---|---|---|---|---|
| 1 | 1 | 14 Tagen | | 90 sec. |
| 2 | 2 | 14 Tagen | | 95 sec. |
| 3 | 3 | 20 Tagen | | 4 min. |
| 4 | 4 | 30 Tagen | | 3 min. |
| 5 | 5 | 30 Tagen | | 3 min. 10 sec. |
| Vergleich | | | | |
| 1 | I | | 3 Stunden | |
| 2 | II | | 20 Stunden | 15 min. |
| 3 | III | | 20 Stunden | 10 min. |
| 4 | IV | 6 Tagen | | 9 min. |
| 5 | V | 6 Tagen | | 20 min. |

Bei einem Harz/Wasser-Verhältnis von 3 : 7 werden die Unterschiede noch deutlicher: Mit den Emulgatoren des Standes der Technik hergestellte Dispersionen laufen aus dem DIN-Becher nicht mehr vollständig aus, während die mit den erfindungsgemäß zu verwendenden Emulgatoren hergestellten Dispersionen Auslaufzeiten von 25 Minuten nicht überschreiten.

Beispiele 6 - 14

Vergleichsbeispiele 6 - 10

500 g Polyesterharz II, 9 g Emulgator und 500 g bzw. 1170 g Wasser wurden dispergiert; diese Dispersion wurde mit 5 g Beschleuniger (10 gew.-%-ige Lösung von Diethylanilin in Styrol) und mit 15 g Benzoylperoxidpaste (50 gew.-%-ig in Dioctylphthalat) versetzt und daraus schwach konisch geformte Formkörper mit einem Volumen von 1 l, einem Gewicht von 1000 g, einer Höhe von 13 cm und einem mittleren Durchmesser von 10 cm hergestellt. Die nachstehende Tabelle gibt Aufschluß über die Wasserabgabe während des Lagerns der erhaltenen Formkörper bei 25°C und 50 - 60 % relativer Luftfeuchtigkeit.

| Beispiel | Emulgator | Harz/Wasser-Verhältnis | % Wasserverlust, bezogen auf Anfangswassergehalt nach | | | | |
|---|---|---|---|---|---|---|---|
| | | | 2 Tagen | 3 Tagen | 7 Tagen | 14 Tagen | 30 Tagen |
| 6 | 1 | 1 : 1 | | 1,6 | 2,2 | 2,9 | 4,5 |
| 7 | 1 | 3 : 7 | | 33 | 52 | 65 | 81 |
| 8 | 2 | 1 : 1 | | 1,6 | 2,2 | 2,9 | 4,5 |
| 9 | 2 | 3 : 7 | | 33 | 52 | 65 | 81 |
| 10 | 3 | 1 : 1 | | 41 | 64 | 81 | 95 |
| 11 | 3 | 3 : 7 | | 41 | 80 | 98,5 | 98,5 |
| 12 | 4 | 1 : 1 | | 44 | 70 | 83 | 91 |
| 13 | 4 | 3 : 7 | | 50 | 67 | 88 | 99 |
| 14 | 5 | 1 : 1 | | 47 | 78 | 98 | |
| Vergleich | | | | | | | |
| 6 | II | 1 : 1 | 34 | | 64 | 85 | |
| 7 | III | 1 : 1 | 39 | | 69 | 92 | |
| 8 | IV | 1 : 1 | 33 | | 74 | 85 | |
| 9 | V | 1 : 1 | | 42 | 65 | 86 | 97 |
| 10 | V | 3 : 7 | | 47 | 82 | 93 | 98,5 |

Der Wasserverlust kann als Maß für die Offenporigkeit der Formkörper angesehen werden.

Beispiele 15 - 17

Vergleichsbeispiel 11

500 g Polyesterharz I, 9 g Emulgator und 500 g Wasser wurden dispergiert. Aus der erhaltenen Emulsion wurden nach Zugabe von 5 g Beschleuniger und 15 g Benzoylperoxidpaste Normstäbe hergestellt. Die Werte für Biege- und Bruchfestigkeit können der nachstehenden Tabelle entnommen werden.

| Beispiel | Emulgator | Biege- u. Bruchfestigkeit [N/cm²] nach 0 Tagen | nach 5 Tagen * |
|---|---|---|---|
| 15 | 1 | 2623 | 2401 |
| 16 | 3 | 963 | 2400 |
| 17 | 4 | 984 | 2880 |
| Vergleich | | | |
| 11 | V | 584 | 1489 |

*) Lagerung wie bei Beispielen 6-10

Patentansprüche

1. Verwendung von Umsetzungsprodukten von Polyalkylenoxiden mit zwei- oder mehrbasischen Carbonsäuren (oder ihren reaktionsfähigen Derivaten) bzw. Di- oder Polyisocyanaten (oder ihren reaktionsfähigen Derivaten) als Emulgatoren für W/O-Dispersionen auf Basis ungesättigter Polyesterharze, dadurch gekennzeichnet, daß die Emulgatoren

   A) zu 75 - 97 Gew.-% aus Polyalkylenoxidresten und

   B) zu 3 - 25 Gew.-% aus Resten von zwei- oder mehrbasischen Carbonsäuren bzw. Di- oder Polyisocyanaten bestehen,

   die Polyalkylenoxidreste als Zahlenmittel bestimmte mittlere Molekulargewichte von 800 - 5000 besitzen, der Propylenoxidanteil dieser Polyalkylenoxidreste 10 - 70 Mol-% beträgt und die zwei- oder mehrbasischen Carbonsäuren Molekulargewichte $<300$ und die Di- oder Polyisocyanate Molekulargewichte $<1500$ besitzen.

2. Verwendung nach Anspruch 1, dadurch gekennzeichnet, daß die Emulgatoren

   A) zu 85 - 96 Gew.-% aus Polyalkylenoxidresten und

   B) zu 4 - 15 Gew.-% aus Resten von zwei- oder mehrbasischen Carbonsäuren bzw. Di- oder Polyisocyanaten bestehen.

0054869

3. Verwendung nach Ansprüchen 1 und 2, dadurch gekennzeichnet, daß die Emulgatoren

   A) zu 90 - 95 Gew.-% aus Polyalkylenoxidresten und

   B) zu 5 - 10 Gew.-% aus Resten von zwei- oder mehrbasischen Carbonsäuren bzw. Di- oder Polyisocyanaten bestehen.

4. Verwendung nach Ansprüchen 1 - 3, dadurch gekennzeichnet, daß die Polyalkylenoxidreste als Zahlenmittel bestimmte mittlere Molekulargewichte von 1500 - 4000 besitzen.

5. Verwendung nach Ansprüchen 1 - 4, dadurch gekennzeichnet, daß die Polyalkylenoxidreste als Zahlenmittel bestimmte mittlere Molekulargewichte von 2000 - 3000 besitzen.

6. Verwendung nach Ansprüchen 1 - 5, dadurch gekennzeichnet, daß der Propylenoxidanteil der Polyalkylenoxidreste 15 - 60 Mol-% beträgt.

7. Verwendung nach Ansprüchen 1 - 6, dadurch gekennzeichnet, daß die zwei- oder mehrbaischen Carbonsäuren Molekulargewichte $< 200$ und die Di- oder Polyisocyanate Molekulargewichte $< 500$ besitzen.

8. Verwendung nach Ansprüchen 1 - 7, dadurch gekennzeichnet, daß die Di- oder Polyisocyanate Molekulargewichte $< 300$ besitzen.

9. Verwendung nach Ansprüchen 1- 8, dadurch gekennzeichnet, daß die Emulgatoren als Zahlenmittel bestimmte Molekulargewichte $\overline{M_n}$ von 2500 bis 5000, und im Mittel 3 bis 10 wiederkehrende Einheiten der Formel

$$- X - (O - CHR^1 - CH_2)_n\ O - \qquad (I)$$

besitzen,

worin X $CO-R^2-CO$ oder $CO-NH-R^3-NH-CO$,
$R^1$ H oder $CH_3$,

$R^2$, $R^3$ je einen zweiwertigen aliphatischen cycloaliphatischen, araliphatischen oder aromatischen Rest mit 2 - 18 C-Atomen und n im Mittel eine Zahl von 18 bis 110 bedeuten mit der Maßgabe, daß diese Verbindungen keine Reste mehr als difunktioneller Verbindungen enthalten.

10. Verwendung nach Ansprüche 1 - 8, dadurch gekennzeichnet, daß die Emulgatoren als Zahlenmittel bestimmte Molekulargewichte $\overline{M_n}$ von 4000 bis 9000 besitzen und der Formel

$$R^4 [-NH - CO -(O - CHR^5 - CH_2)_x \; O - R^6]_y$$

entsprechen, worin

$R^4$ einen y-wertigen aliphatischen, cycloaliphatischen, araliphatischen oder aromatischen Rest mit 2 - 36 C-Atomen,

$R^5$ H oder $CH_3$,

$R^6$ einen einwertigen aliphatischen Rest mit 1 - 18 C-Atomen,

x im Mittel eine Zahl von 18 bis 100 und

y im Mittel eine Zahl von 3 bis 15 bedeuten.

0054869

Europäisches Patentamt

# EUROPÄISCHER RECHERCHENBERICHT

Nummer der Anmeldung
EP 81 11 0382

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D,A | DE - A - 1 928 026 (G.WILL) | |
| | * Patentanspruch 1 * | 1 |
| | -- | |
| D,A | DE - A - 2 046 575 (DOW CHEMICAL) | |
| | * Patentansprüche 1,6,7 * | 1 |
| | -- | |
| A | FR - A - 1 448 852 (BAYER) | |
| | * Zusammenfassung * | 1 |
| D | & DE - B - 1 267 845 | |
| | -- | |
| A | FR - A - 1 567 930 (ASHLAND OIL & REFINING) | |
| | * Zusammenfassung; Seite 4, Absatz 5 - Seite 5, Absatz 1 * | 1 |
| | ---------- | |

KLASSIFIKATION DER ANMELDUNG (Int. Cl.[3])

C 08 J 9/28
B 01 F 17/00
C 08 J 3/02

RECHERCHIERTE SACHGEBIETE (Int. Cl.[3])

C 08 J 3/
C 08 J 9/
B 01 F 17/

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| DEN HAAG | 08-04-1982 | HALLEMEESCH |